# EUROPEAN PATENT APPLICATION

(11) **EP 4 632 672 A1**
(43) Date of publication of application: **15.10.2025**
(21) Application number: 25163643.7
(22) Date of filing: 13.03.2025
(51) Int. Cl.: G06T 7/00, G06T 11/00

(54) **X-RAY INSPECTION APPARATUS**

(30) Priority: 19.03.2024 JP 2024044075
(71) Applicant: Ishida Co., Ltd., Kyoto-shi Kyoto 606-8392 (JP)
(72) Inventor: IKEDA, Shinya, Ritto-shi, Shiga, 520-3026 (JP)
(74) Representative: Global IP Europe Patentanwaltskanzlei

(57) **Abstract**

An X-ray inspection apparatus 1 includes an X-ray irradiation unit 6 configured to irradiate a plurality of objects with X-rays, an X-ray detection unit 7 configured to detect X-rays transmitted through the objects or X-rays reflected by the objects, an image generation unit 12 configured to generate an image for inspecting the number of objects based on the X-rays detected by the X-ray detection unit 7, and an inspection unit 13 configured to inspect the number of objects based on the image. The image generation unit 12 generates area output information obtained using a learning model with the image as an input to identify areas of the objects in the image and processed information obtained by performing image processing on the image. The inspection unit 13 calculates the number of objects based on the area output information and the processed information.

## Description

### TECHNICAL FIELD

The present disclosure relates to an X-ray inspection apparatus.

### BACKGROUND

Conventionally, a technique for inspecting overlapping objects is known in which a transmission image of the objects based on electromagnetic waves is generated and overlapping regions are extracted using a grayscale threshold corresponding to the number of overlapping items (see, for example, Japanese Patent No. 6454503). In this method based on the transmission image and the grayscale threshold, because the accuracy of object inspection may decrease as a degree to which objects overlap increases, attempts have been made to count the number of overlapping objects using machine learning (see, for example, Japanese Patent No. 6537008).

### SUMMARY

By using machine learning with an image as an input to count the number of objects in the image, the accuracy of object inspection is improved when a machine learning inference result is appropriate. However, the machine learning inference result may not be appropriate due to the nature of the machine learning inference. In this case, counting using machine learning (a learning model) alone may result in inaccurate inspection results for the number of objects in an image, and there is room for improving the accuracy of object count inspection.

An objective of the present disclosure is to provide an X-ray inspection apparatus capable of improving the accuracy of object count inspection compared to when counting is performed solely using a learning model.

(1) According to an aspect of the present disclosure, there is provided an X-ray inspection apparatus including: an irradiation unit configured to irradiate a plurality of objects with X-rays; a detection unit configured to detect X-rays transmitted through the objects or X-rays reflected by the objects; a generation unit configured to generate an image for inspecting the number of objects based on the X-rays detected by the detection unit; and an inspection unit configured to inspect the number of objects based on the image, wherein the generation unit generates area output information obtained using a learning model with the image as an input to identify areas of the objects in the image and processed information obtained by performing image processing on the image, and wherein the inspection unit calculates the number of objects based on the area output information and the processed information.

In the X-ray inspection apparatus according to the aspect of the present disclosure, the area output information obtained using the learning model with the image as the input to identify the areas of the objects in the image and processed information obtained by performing image processing on the image are generated. The number of objects is calculated based on the processed information obtained by performing image processing on the image as well as the area output information obtained using the learning model. Thereby, even if an inference result using the learning model is not appropriate, for example, even if there is an omission in identifying the areas of the objects, the number of objects can be corrected using the processed information obtained by performing image processing on the image. Therefore, the accuracy of object count inspection can be improved compared to when counting is performed solely using a learning model.

(2) In the above-described (1), the generation unit may generate a luminance-processed image based on luminance of the X-rays detected by the detection unit and a predetermined luminance threshold, and the inspection unit may calculate the number of objects based on a difference between the area output information and the luminance-processed image. In this case, even if there is an omission in identifying the areas of the objects in the area output information, for example, the number of objects can be corrected using the difference between the area output information and the luminance-processed image.

(3) In the above-described (2), the detection unit may detect the X-rays transmitted through the objects, and, when the inspection unit recognizes an overlapping area in which a plurality of objects belong to the same pixel in the image, the inspection unit may correct the number of objects based on the number of objects belonging to the overlapping area in the area output information and the number of objects belonging to the overlapping area in the luminance-processed image. In this case, for example, even if there is an omission in the count of the number of objects belonging to the overlapping area in the area output information, the number of objects can be corrected using the number of objects belonging to the overlapping area in the luminance-processed image.

(4) In the above-described (2) or (3), the generation unit may generate a first missing image including a first missing area where it is inferred that the object is absent from the area output information and the object is present in the luminance-processed image based on the difference between the area output information and the luminance-processed image, and may generate a first complementary image obtained by performing image processing including a process of expanding, reducing, or filtering the first missing area of the first missing image and the difference between the area output information and the luminance-processed image, and the inspection unit may correct the number of objects based on the first complementary image. In this case, for example, even if an omission occurs in identifying the object area in the area output information, the number of objects can be corrected using the number of objects included in the first complementary image.

(5) In the above-described (1), the generation unit may generate overlap output information obtained using a learning model with an image indicating luminance of the X-rays detected by the detection unit as an input to identify the number of overlapping objects in an overlapping area to which a plurality of objects belong in the same pixel in the image, may generate a second missing image including a second missing area where it is inferred that the object is present in the overlap output information and it is inferred that the object is absent from the area output information based on a difference between the overlap output information and the area output information, may generate a second complementary image obtained by performing image processing including a process of expanding, reducing, or filtering the second missing area of the second missing image, and may generate complementary output image obtained using the learning model with the second complementary image as an input to identify an area of the object in the second complementary image, and the inspection unit may correct the number of objects based on the complementary output image. In this case, the number of objects is corrected by further using, as the learning model, a learning model with the image indicating the luminance of the X-rays detected by the detection unit as the input to identify the number of overlapping objects in the overlapping area. Therefore, for example, when a density level of the overlapping area is unclear and it is difficult to clearly distinguish the number of overlapping objects in the overlapping area, the inspection accuracy can be further improved compared to when only the learning model for identifying the above-described object area is used as the learning model.

According to the present disclosure, the accuracy of object count inspection can be improved compared to when counting is performed solely using a learning model.

### BRIEF DESCRIPTION OF THE DRAWINGS

FIG. 1 is a configuration diagram of an X-ray inspection apparatus according to an embodiment.
FIG. 2 is a schematic diagram illustrating an example of a product in a plan view.
FIG. 3 is a configuration diagram of the inside of a shielding box shown in FIG. 1.
FIG. 4 is a schematic diagram illustrating an example of a transmission image of the product.
FIG. 5 is a block diagram illustrating a functional configuration of the X-ray inspection apparatus of FIG. 1.
FIG. 6A is a schematic diagram illustrating an X-ray transmission image of X-rays transmitted through a plurality of objects detected by the X-ray detection unit.
FIG. 6B is an example of a luminance-processed image based on the X-ray transmission image of FIG. 6A.
FIG. 6C is an example of an area output image based on the X-ray transmission image of FIG. 6A.
FIG. 6D is an example of a first missing image.
FIG. 6E is an example of a first complementary image obtained by performing image processing on the first missing image.
FIG. 7A is a schematic diagram illustrating an X-ray transmission image of X-rays transmitted through a plurality of objects detected by the X-ray detection unit.
FIG. 7B is an example of an area output image identified by a first learning model with the X-ray transmission image of FIG. 7A as an input.
FIG. 7C is an example of an overlap output image based on the X-ray transmission image of FIG. 7A.
FIG. 8A is an example of a second missing image.
FIG. 8B is an example of a second complementary image.
FIG. 8C is an example of a complementary output image, which is area output information identified by the first learning model with the second complementary image of FIG. 8B as an input.

### DETAILED DESCRIPTION

Hereinafter, embodiments of the present disclosure will be described with reference to the drawings. In the description of the drawings, the same or equivalent elements are given the same reference signs, and redundant description is omitted.

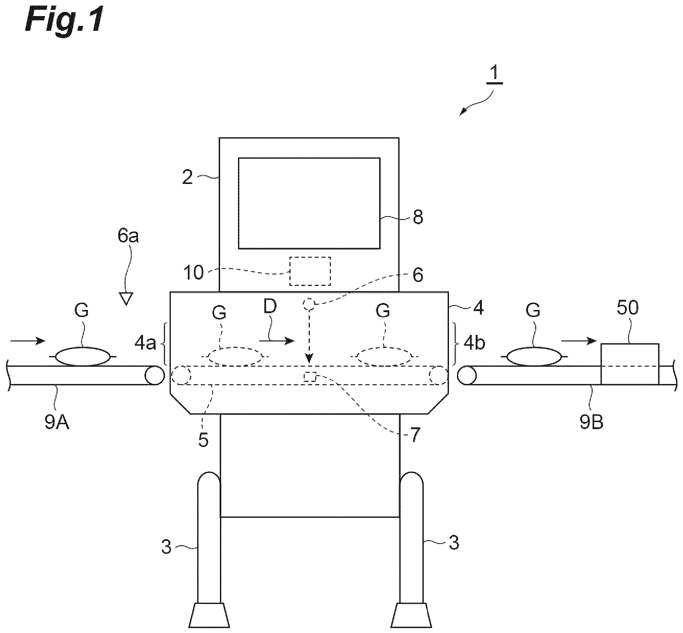

FIG. 1 is a configuration diagram of an X-ray inspection apparatus according to an embodiment. As shown in FIG. 1, an X-ray inspection apparatus 1 includes a device body 2, support legs 3, a shielding box 4, a transport conveyor 5, an X-ray irradiation unit (an irradiation unit) 6, an X-ray detection unit (a detection unit) 7, a display 8, and a controller 10. The X-ray inspection apparatus 1 acquires a transmission image of a product G while transporting the product G and inspects the product G based on the transmission image.

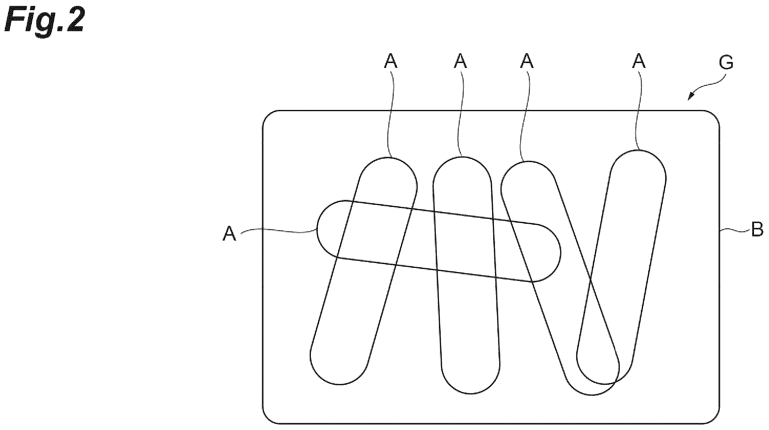

FIG. 2 is a schematic diagram illustrating an example of a product in a plan view. As shown in FIG. 2, the product G has a plurality of objects A and a bag B containing the plurality of objects A. Here, the object A is a food product (e.g., sausages or the like) having a predetermined shape. In the product G, a predetermined number of objects A are packaged in the bag B. In each product G among many products G inspected by the X-ray inspection apparatus 1, the objects A overlap each other in the bag B in a plan view.

In FIG. 1, the product G before the inspection is conveyed into the X-ray inspection apparatus 1 by an infeed conveyor 9A, and the product G after the inspection is conveyed out from the X-ray inspection apparatus 1 by an outfeed conveyor 9B. The X-ray inspection apparatus 1 determines whether the product G is acceptable (non-defective) or defective, for example, depending on whether the number of objects A in one product G is equal to a predetermined number. The product G determined to be a defective product by the X-ray inspection apparatus 1 is diverted from a production line (out of a system) by a sorting device 50 arranged downstream of the outfeed conveyor 9B and the product G determined to be an acceptable product by the X-ray inspection apparatus 1 passes through the sorting device 50 as it is.

The device body 2 houses the controller 10 and the like. The support legs 3 support the device body 2. The shielding box 4 is provided on the device body 2 and prevents leakage of X-rays. In the shielding box 4, an entrance 4a and an exit 4b are formed. Products G before the inspection are conveyed into the shielding box 4 from the infeed conveyor 9A through the entrance 4a and the products G after the inspection are conveyed out from the shielding box 4 to the outfeed conveyor 9B through the exit 4b. An X-ray shielding curtain (not shown) that prevents leakage of X-rays is provided in each of the entrance 4a and the exit 4b. A detection sensor 6a detects the product G transported by the infeed conveyor 9A. A detection result of the detection sensor 6a is acquired by the controller 10.

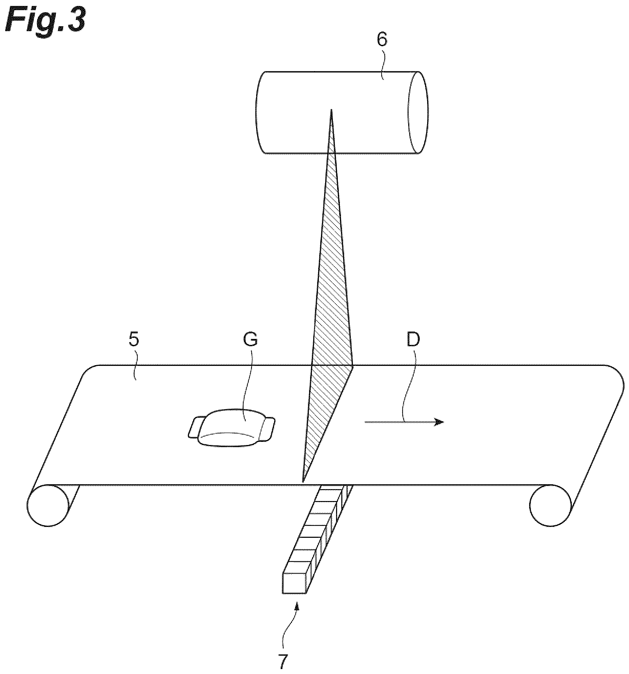

FIG. 3 is a diagram illustrating an internal configuration of the shielding box shown in FIG. 1. As shown in FIGS. 1 and 3, the transport conveyor 5 is arranged in the shielding box 4 and transports the product G from the entrance 4a to the exit 4b along a transport direction D. The transport conveyor 5 is, for example, a belt conveyor stretched between the entrance 4a and the exit 4b. The X-ray irradiation unit 6 is arranged in the shielding box 4 and irradiates the product G transported by the transport conveyor 5 with X-rays, thereby irradiating a plurality of objects A in the product G with X-rays. The irradiation of X-rays by the X-ray irradiation unit 6 is controlled by the controller 10.

The X-ray detection unit 7 is arranged in the shielding box 4 and detects X-rays radiated from the X-ray irradiation unit 6 and transmitted through the transport conveyor 5 and the plurality of objects A in the product G. The X-ray detection unit 7 is, for example, configured as a line sensor. A detection signal detected by the X-ray detection unit 7 is acquired by the controller 10.

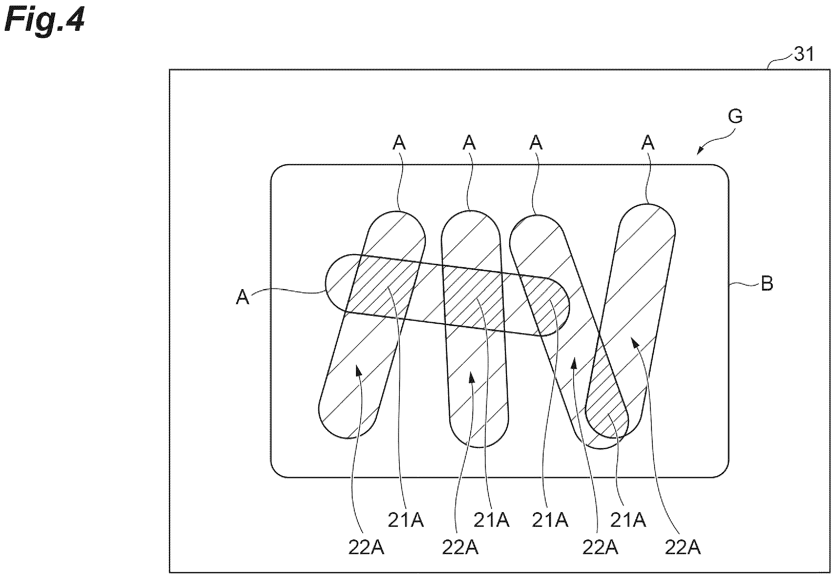

FIG. 4 is a schematic diagram illustrating an example of a transmission image of a product. A transmission image 31 shown in FIG. 4 includes a plurality of pixels. Each pixel of the transmission image 31 has a density level corresponding to the number of detected X-rays. In the example of FIG. 4, the density level of the transmission image 31 is expressed as a density of hatched lines. In a pixel, the larger the number of detected X-rays, the higher the pixel density level (the hatching becomes sparser), and the smaller the number of detected X-rays, the lower the pixel density level (the hatching becomes denser).

In each product G, in an area where the objects A overlap each other in the bag B in a plan view, the number of detected X-rays is smaller than in a non-overlapping area. In the example of FIG. 4, the area where the objects A overlap each other in the bag B in a plan view is shown as an overlapping area 21A. The overlapping area 21A is an area to which a plurality of objects A belong in the same pixel in the transmission image 31 (image).

The display 8 is provided in the device body 2. The display 8 has a display screen serving as a touch panel and a speaker. The display 8 functions as an operation input unit that accepts inputs of various types of conditions and the like via the display screen. The display 8 functions as a display unit that, via the display screen, displays the inspection results and the like of the X-ray inspection apparatus 1.

The controller 10 is arranged in the device body 2 and controls an operation of each part of the X-ray inspection apparatus 1. The controller 10 includes a processor such as a central processing unit (CPU), memories such as a read-only memory (ROM) and a random-access memory (RAM), and a storage such as a solid-state drive (SSD). A program for controlling the X-ray inspection apparatus 1 is recorded in the ROM. The functions of the controller 10 can be implemented, for example, by software executed by the CPU after a program stored in the ROM is loaded onto the RAM. The functions of the controller 10 may be implemented by hardware such as an electronic circuit.

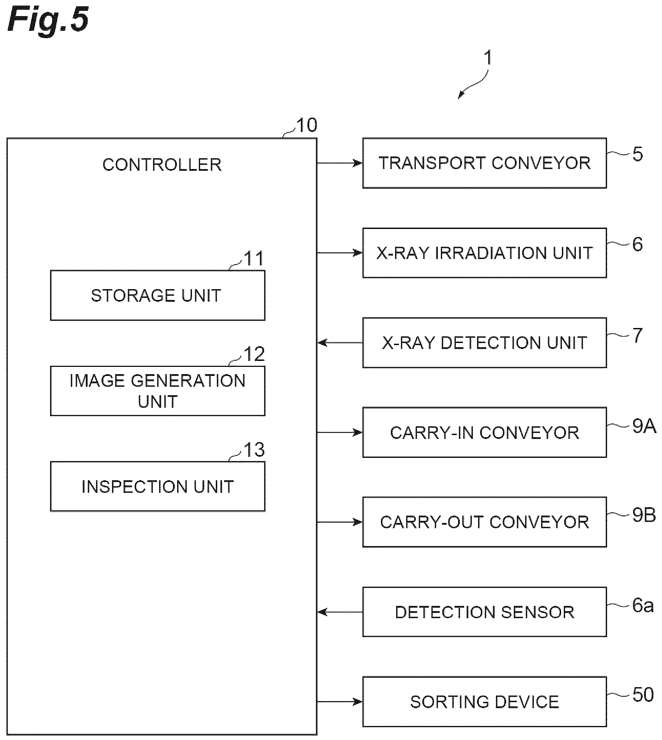

FIG. 5 is a block diagram illustrating a functional configuration of the X-ray inspection apparatus of FIG. 1. As shown in FIGS. 4 and 5, the controller 10 has a storage unit 11, an image generation unit (a generation unit) 12, and an inspection unit 13.

The storage unit 11 includes one or more of a hard disk drive (HDD) and a flash memory. The storage unit 11 may be provided in the controller 10, may be provided in the device body 2, or may be provided to be able to communicate with the controller 10 via a network.

The storage unit 11 stores a trained first learning model (a learning model for identifying an area of an object). The first learning model is a machine learning model trained by deep learning to identify an object area 22A, which is an area of objectAin an image. The object area 22A corresponds to an area surrounded by the outer edge of object A in an image in which object A is shown.

For example, a transmission image of X-rays transmitted through a plurality of objects A detected by the X-ray detection unit 7 is input to the first learning model. The first learning model identifies the object area 22A of object A in the transmission image. The first learning model may output the number of identified object areas 22A of objects A as the number of objects A in the transmission image.

The first learning model is trained by extracting a feature quantity related to the object area 22A through machine learning using image data in which the object area 22A is set in advance as training data. The feature quantity related to the object area 22A corresponds to a feature related to the outer edge of the object A in the transmission image of the product G extracted from this training data. In the first learning model, for example, data related to a position and a dimension of the outer edge of one object A is used as data related to an area where the object A is present in the transmission image of the product G. The data related to the position and dimension of the outer edge of the object A may include coordinates of an upper left pixel of a smallest rectangular area including the outer edge of the object A and coordinates of a lower right pixel of the rectangular area for the outer edge of one object A.

The training data of the first learning model may be associated with data of the transmission image of the product G and data related to the outer edge of the object A in the transmission image. A neural network constituting the first learning model is, for example, a convolutional neural network (CNN) including a plurality of layers including a plurality of convolutional layers and pooling layers. The neural network may further be configured as a recurrent neural network (RNN).

A transmission image 31 generated by the image generation unit 12 or the like may be used as the image input to the first learning model. In addition, the input of the first learning model is not limited to the transmission image 31 of the X-rays transmitted through a plurality of objects A. The input of the first learning model may be an image obtained as a result of image processing, and may be an image in which a plurality of objects A are displayed in a manner similar to a transmission image.

The image generation unit 12 generates an image (information) for inspecting the number of objects A based on the X-rays detected by the X-ray detection unit 7.

In the present embodiment, the image generation unit 12 generates a luminance-processed image based on the number (luminance) of X-rays detected by the X-ray detection unit 7 and a predetermined luminance threshold. The luminance-processed image here is an image obtained by processing a transmission image of X-rays transmitted through a plurality of objects A using a plurality of luminance thresholds so that a density level according to a degree to which the plurality of objects A overlap each other is provided. The image generation unit 12 generates a luminance-processed image based on, for example, a comparison result between the number of X-rays transmitted through a plurality of objects A detected by the X-ray detection unit 7 and a plurality of luminance thresholds according to a degree to which the plurality of objects A overlap each other. The luminance-processed image here corresponds to processing information obtained by the image generation unit 12 performing image processing on an image. The processing information may be information such as a numerical value for each pixel obtained by the image generation unit 12 performing image processing on an image.

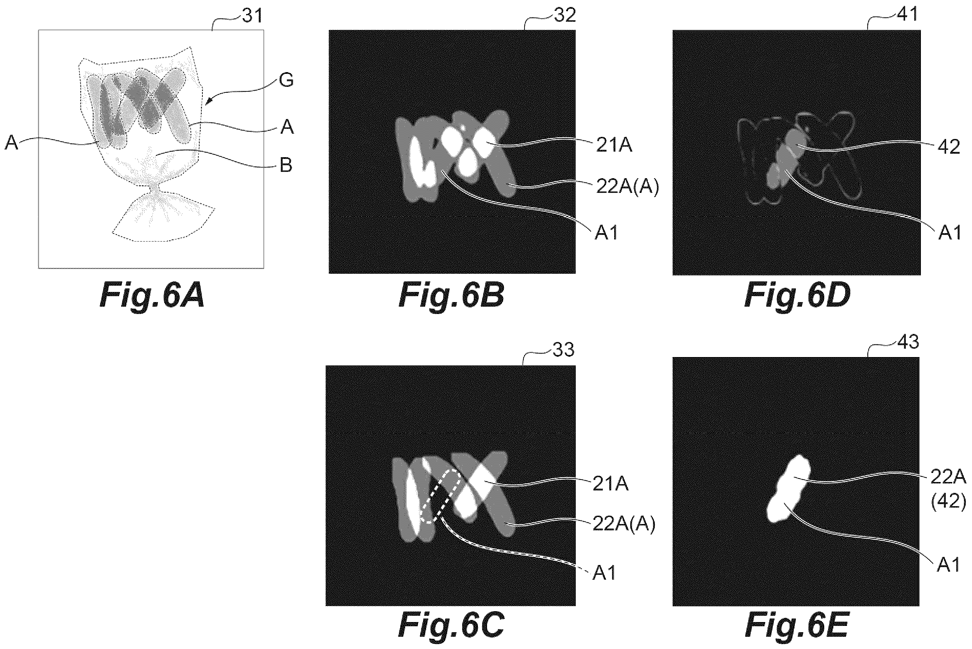

FIGS. 6A to 6E are explanatory diagrams of a first calculation example of the number of objects. FIG. 6A is a diagram illustrating a schematic example of a transmission image of X-rays transmitted through a plurality of objects A detected by the X-ray detection unit 7. In FIG. 6A, a schematic diagram of an X-ray transmission image 31 of a bag B containing a plurality of objects A as a product G is shown. In FIG. 6A, a state in which the plurality of objects A overlap each other in the bag B is projected as a density level according to the degree to which the plurality of objects A overlap each other.

FIG. 6B is an example of a luminance-processed image 32 based on an X-ray transmission image 31 of FIG. 6A. In the luminance-processed image 32 of FIG. 6B, a part where one object A may be present is shown in gray, a part where two objects A overlapping each other may be present is shown in white, and a surrounding part where object A is absent is shown in black, in accordance with the luminance of the transmission image 31 of FIG. 6A. The luminance-processed image 32 of FIG. 6B is obtained by performing image processing on the transmission image 31 of FIG. 6A using a plurality of luminance thresholds according to the density level. In FIG. 6B, an outer edge of a gray part where one object A may be present corresponds to the object area 22A and a white part where two objects A overlapping each other may be present corresponds to the overlapping area 21A.

The image generation unit 12 generates area output information using the above-described first learning model with the transmission image 31 (image) of FIG. 6A as an input to identify the area of object A in the transmission image 31. The area output information may be information obtained as the output of the first learning model and may be, for example, information such as a numerical value for each pixel or may be a grayscale image formed by combining pixel-specific grayscale values for a plurality of pixels. The image generation unit 12 generates an area output image 33, for example, using the above-described first learning model. The area output image 33 is an image obtained as the output of the first learning model.

FIG. 6C is an example of an area output image 33 based on the transmission image 31 of FIG. 6A. In the area output image 33 of FIG. 6C, the outer edge of each object A is identified by the first learning model in accordance with the luminance of the transmission image 31 of FIG. 6A. For the object area 22A surrounded by the outer edge of each object A, the portion corresponding to a single object A is shown in gray, a portion where two objects A overlap each other is shown in white, and a portion outside of the outer edge of each object A is shown in black.

Here, in the area output image 33, not all of the object areas 22A of objects A included in the input transmission image 31 of FIG. 6A may be identified by using the first learning model. In FIG. 6C, an object area of object A1 present in FIG. 6B is not properly identified. In this case, if objects A are counted solely using the first learning model, an inspection result for the number of objects A in the transmission image 31 may be inaccurate.

Therefore, the image generation unit 12 generates an image of a difference between the area output image 33 and the luminance-processed image 32. Based on the difference between the area output image 33 and the luminance-processed image 32, the image generation unit 12 generates a first missing image 41 including a first missing area 42 in which it is inferred that object A1 is absent from the area output image 33 and object A1 is present in the luminance-processed image 32. The image generation unit 12, for example, generates the first missing image 41, which is a difference image, by calculating a difference between a pixel value of the area output image 33 of FIG. 6C and a pixel value of the luminance-processed image 32 of FIG. 6B. FIG. 6D is an example of the first missing image 41. As shown in FIG. 6D, in the first missing image 41, a difference occurs in a pixel value difference between an area matching an inference result and an area mismatching the inference result, such that the first missing area 42 becomes noticeable along the outer edge of object A1 of FIG. 6B and is highlighted with a density level different from that of the surrounding area. The first missing area 42 is an area of object A1 that is not properly identified (or that is missed) by the above-described first learning model.

The image generation unit 12 may generate a first complementary image 43 obtained by performing image processing including a process of expanding or reducing the first missing area 42 of the first missing image 41 and a difference between the area output image 33 and the luminance-processed image 32. The image generation unit 12 may perform image processing including a process of expanding, reducing, or filtering (e.g., a median filter or the like) the first missing area 42 of the first missing image 41 to smooth discontinuous parts of the outer edge and inside of the first missing area 42, thereby generating a first complementary image 43. FIG. 6E is an example of the first complementary image 43 obtained by performing image processing on the first missing image 41.

The inspection unit 13 corrects the number of objects A based on the first complementary image 43. The inspection unit 13 calculates the number of objects A based on the area output image 33 and the first complementary image 43 (processing information). In the present embodiment, the inspection unit 13 calculates the number of objects A based on a difference between the area output image 33 and the luminance-processed image 32. For example, the inspection unit 13 calculates the number of objects A in the product G (6 objects) by adding the number of object areas 22A of objects A identified in the area output image 33 of FIG. 6C (5 objects) and the number of object areas 22A of objects A1 identified in the first complementary image 43 of FIG. 6E (1 object).

In addition, the number of object areas 22A of objects A1 identified in the first complementary image 43 of FIG. 6E may be counted by identifying object areas 22A of objects A1 using a first learning model with the first complementary image 43 of FIG. 6E as an input, or may be counted by an operator's visual inspection when the first complementary image 43 is displayed on the display 8.

In the above-described X-ray inspection apparatus 1, an area output image 33 obtained using a first learning model with the transmission image 31 as an input to identify the object area 22A of object A in the transmission image 31 and images (the luminance-processed image 32, the first missing image 41, the first complementary image 43, and the like) obtained by performing image processing on the transmission image 31 are generated. The number of objects A is calculated based on not only the area output image 33 obtained using the first learning model, but also the image obtained by performing image processing on the transmission image 31. Thereby, even if an inference result using the first learning model is not appropriate and, for example, an omission occurs in identifying the area of object A1, the number of objects A can be corrected using the image obtained by performing image processing on the transmission image 31. Therefore, the accuracy of counting the number of objects A during inspection can be improved compared to when counting is performed solely using the first learning model.

The image generation unit 12 generates the luminance-processed image 32 based on the luminance of the X-rays detected by the X-ray detection unit 7 and a predetermined luminance threshold. The inspection unit 13 calculates the number of objects A based on the difference (the first missing image 41, the first complementary image 43, or the like) between the area output image 33 and the luminance-processed image 32. Thereby, for example, even if an omission occurs in identifying the object area 22A of object A in the area output image 33, the number of objects A can be corrected using the difference between the area output image 33 and the luminance-processed image 32.

Based on the difference between the area output image 33 and the luminance-processed image 32, the image generation unit 12 generates a first missing image 41 including a first missing area 42 where it is inferred that object A1 is absent from the area output image 33 and object A1 is present in the luminance-processed image 32. The first complementary image 43 obtained by performing image processing including a process of expanding, reducing, or filtering the first missing area 42 of the first missing image 41 and a difference between the area output image 33 and the luminance-processed image 32 is generated. The inspection unit 13 corrects the number of objects A based on the first complementary image 43. Thereby, even if there is an omission in identifying the area of object A1 in the area output image 33, the number of objects A can be corrected using the number of objects A1 included in the first complementary image 43.

Although the embodiment of the present disclosure has been described above, the present disclosure is not necessarily limited to the above-described embodiment, and various modifications are possible without departing from the spirit and scope of the disclosure.

Although the transmission image 31 of the X-rays transmitted through a plurality of objects A detected by the X-ray detection unit 7 is input to the first learning model and the number of objects A is corrected by taking a difference between the luminance of the X-rays detected by the X-ray detection unit 7 and the luminance-processed image 32 generated based on a predetermined luminance threshold in the above-described embodiment, the present disclosure is not limited thereto. For example, instead of the first learning model or in addition to the first learning model, the number of objects may be corrected using a second learning model for identifying the number of overlapping objects in an overlapping area (a learning model for identifying the number of overlapping objects).

The second learning model is a machine learning model that has been trained by deep learning to identify the number of overlapping objects in an overlapping area in an image. For example, a transmission image obtained from the X-rays that have passed through a plurality of objects detected by the X-ray detection unit 7 is input to the second learning model. The second learning model identifies the number of overlapping objects in each overlapping area in the transmission image. The second learning model may output object areas of objects constituting respective overlapping areas in accordance with positions and shapes of respective overlapping areas and the number of overlapping objects.

The second learning model is trained by extracting a feature quantity related to the overlapping area through machine learning using image data in which an overlapping area is set in advance as training data. A feature quantity related to the overlapping area corresponds to a feature related to the overlapping area in a transmission image of the object extracted from this training data. The feature related to the overlapping area may include a feature related to an outer edge of a plurality of objects constituting the overlapping area (an outer edge around the overlapping area).

In the second learning model, for example, data related to a position and dimension of one overlapping area is used as data related to the overlapping area of the object in the transmission image of the object. The data related to the position and dimension of the overlapping area may include coordinates of an upper left pixel of a smallest rectangular area that includes the overlapping area and coordinates of a lower right pixel of the smallest rectangular area, for one overlapping area.

The training data for the second learning model may be associated with data of the transmission image of the object, data related to the number of overlapping objects in the overlapping area, and data related to object areas of the objects constituting each overlapping area. A neural network constituting the second learning model, for example, may be configured similarly to the first learning model.

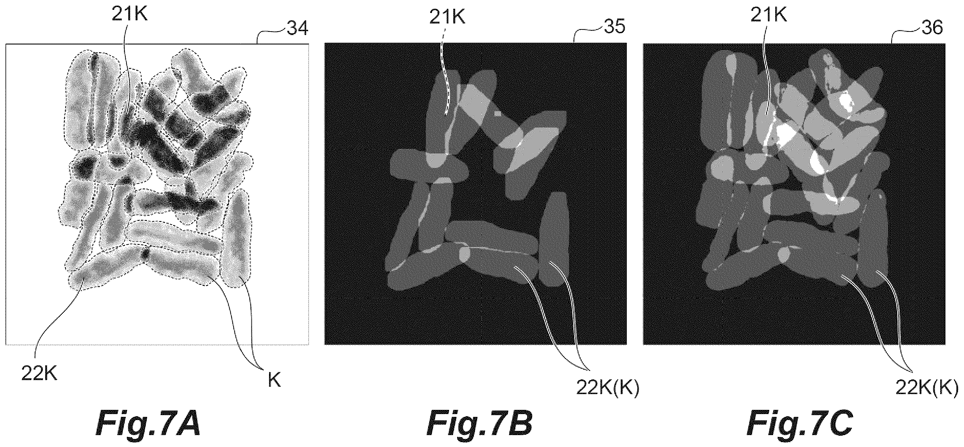

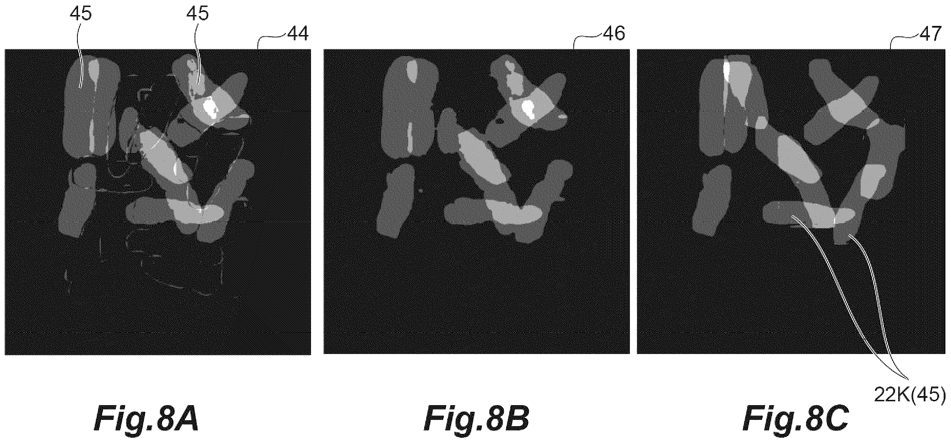

FIGS. 7A to 7C and 8A to 8C are explanatory diagrams of a second calculation example of the number of objects. FIG. 7A is a diagram illustrating a schematic example of an X-ray transmission image of a plurality of objects K detected by the X-ray detection unit 7. The objects K are, for example, cooked karaage (Japanese-style fried chicken) having a coating of a predetermined thickness. In FIG. 7A, a schematic diagram of an X-ray transmission image 34 of a plurality of objects K is shown. In FIG. 7A, a state in which the plurality of objects K overlap each other is displayed as a density level according to a degree to which the plurality of objects K overlap each other.

FIG. 7B is an example of an area output image 35 identified by the first learning model with the transmission image 34 of FIG. 7A as an input. In the transmission image 34 of FIG. 7A, the density level of the overlapping area 21K is less clear than that of the overlapping area 21A in the transmission image 31 of object A of FIG. 6A due to an influence of the coating of object K, and it is difficult to clearly distinguish the number of overlapping objects K in the same overlapping area 21K. In the example of the area output image 35 of FIG. 7B, the object area 22K of the object K in the transmission image 34 of FIG. 7A is not appropriately identified (or is missed), and thus it may not be easy to identify the object area 22K of object K only by the first learning model.

Therefore, the image generation unit 12 generates overlap output information obtained using a second learning model with the transmission image 34 (the image) of FIG. 7A as an input to identify the number of overlapping objects K in the overlapping area 21K. The overlap output information is information obtained as an output of the second learning model, and may be, for example, numerical information such as the number of overlapping objects for each pixel, or may be an image of a plurality of objects overlapping at the pixel corresponding to the number of overlapping objects for each pixel. The image generation unit 12 generates an overlap output image 36 using, for example, the above-described second learning model. The overlap output image 36 is an image obtained as an output of the second learning model.

FIG. 7C is an example of the overlap output image 36 based on the X-ray transmission image 34 of FIG. 7A. In accordance with a feature of the overlapping area 21K in the transmission image 34 of FIG. 7A, the number of overlapping objects K in each overlapping area 21K and the object areas 22K of the objects K constituting each overlapping area 21K are identified by the second learning model. In the overlap output image 36 of FIG. 7C, for the object area 22K surrounded by the outer edge of each object K, a portion of one object K is shown in dark gray, a portion where two objects K overlap each other is shown in light gray, a portion where three objects K overlap each other is shown in white, and a portion outside of the outer edge of each object K is shown in black.

Based on a difference between the overlap output image 36 and the area output image 35, the image generation unit 12 generates a second missing image 44 including a second missing area 45 in which it is inferred that the object K is present in the overlap output image 36 and it is inferred that the object K is absent from the area output image 35. The image generation unit 12, for example, generates the second missing image 44 of FIG. 8A, which is an image of a difference, by calculating differences between pixel values of the area output image 35 of FIG. 7B and pixel values of the overlap output image 36 of FIG. 7C. FIG. 8A is an example of the second missing image 44. As shown in FIG. 8A, in the second missing image 44, a difference occurs in a pixel value difference between an area matching the inference result and an area mismatching the inference result, which causes the second missing area 45 to emerge and be highlighted with a density level different from that of the surrounding area. The second missing area 45 is an area of the object K that is not properly identified (or is missed) by the first learning model.

The image generation unit 12 generates a second complementary image 46 obtained by performing image processing including a process of expanding, reducing, or filtering the second missing area 45 of the second missing image 44 of FIG. 8A. In the second missing image 44 of FIG. 8A, noise may occur due to, for example, the edge of an object K that has been properly identified remaining or the second missing area 45 containing a hole or the like. By performing image processing including a process of expanding, reducing, or filtering the second missing area 45, the cause of such noise is eliminated. FIG. 8B is an example of the second complementary image 46. The second complementary image 46 is an image obtained by extracting object K, which was not properly identified (or was overlooked) by the first learning model, to compensate for the insufficient number of objects K.

The image generation unit 12 may generate a complementary output image 47 obtained using a first learning model with the second complementary image 46 of FIG. 8B as an input to identify the area of the object K in the second complementary image 46. FIG. 8C is an example of the complementary output image 47 that is area output information identified by the above-described first learning model with the second complementary image 46 of FIG. 8B as an input.

The inspection unit 13 corrects the number of objects K based on the complementary output image 47 of FIG. 8C. For example, the inspection unit 13 calculates the number of objects K (23) in the transmission image 34 of FIG. 7A by adding the number of objects K (12) identified in the area output image 35 of FIG. 7B and the number of objects K (11) identified in the complementary output image 47 of FIG. 8C.

Thereby, the number of objects K is corrected by further using, as the learning model, a second learning model with the transmission image 34 (the image) representing the luminance of X-rays detected by the X-ray detection unit 7 as an input to identify the number of overlapping objects K in the overlapping area 21K. Therefore, even if the density level of the overlapping area 21K is unclear and it is difficult to clearly distinguish the number of overlapping objects K in the overlapping area 21K, it is possible to further improve the inspection accuracy compared to when only the first learning model that identifies the object area 22K of the above-described object K is used as the learning model.

In the above-described embodiment, because the input image is an X-ray transmission image, instead of one of the overlapping objects appearing in the image and the other hidden as in a normal camera image, both overlapping objects appear as overlapping areas with different density levels in the overlapping parts. Such circumstances are likely to affect a case where the object is not properly identified (or is missed), for example, by erroneously eliminating the object by a non-maximum suppression (NMS) process, in the inference of the object area 22A of the object using the first learning model. Therefore, parameters of NMS of the first learning model and the like may be set in consideration of such effects.

Although the X-ray detection unit 7 detects X-rays transmitted through the object in the above-described embodiment and modified example, X-rays reflected by the object may be detected. In this case, the number of objects can be corrected as in the above embodiment and modified example using an image generated in accordance with the luminance of the X-rays reflected by the object (the number of X-rays) instead of the X-ray transmission images 31 and 34.

In the above-described embodiment, as a first calculation example of the number of objects, the first missing image 41 including the first missing area 42 is generated based on the difference between the area output image 33 and the luminance-processed image 32, but the present disclosure is not limited to such an example of manipulating the area in the image. For example, when the inspection unit 13 recognizes an overlapping area 21A to which a plurality of objects belong in the same pixel in the image, the number of objects may be corrected based on the number of objects belonging to the overlapping area 21A in the area output image 33 and the number of objects belonging to the overlapping area 21A in the luminance-processed image 32. The number of objects belonging to the overlapping area 21A in the area output image 33 may be identified using the area output image 33 as input to the second learning model. The number of objects belonging to the overlapping area 21A in the luminance-processed image 32 may be identified using the luminance-processed image 32 as input to the second learning model. In this case, for example, even if there is an omission in the count of the number of objects belonging to the overlapping area 21A in the area output image 33, the number of objects can be corrected using the number of objects belonging to the overlapping area 21A in the luminance-processed image 32.

Although the bag B containing the plurality of objects A is exemplified as the product G in the above embodiment, the bag B is not essential and the present disclosure can be applied, for example, even if a plurality of objects are scattered on the transport conveyor 5.

## Claims

1. An X-ray inspection apparatus comprising:
an irradiation unit configured to irradiate a plurality of objects with X-rays;
a detection unit configured to detect X-rays transmitted through the objects or X-rays reflected by the objects;
a generation unit configured to generate an image for inspecting the number of objects based on the X-rays detected by the detection unit; and
an inspection unit configured to inspect the number of objects based on the image;
wherein
the generation unit is configured to generate:
area output information obtained using a learning model with the image as an input to identify areas of the objects in the image and
processed information obtained by performing image processing on the image; and
the inspection unit is configured to calculate the number of objects based on the area output information and the processed information.

2. The X-ray inspection apparatus according to claim 1, wherein
the generation unit is configured to generate a luminance-processed image based on luminance of the X-rays detected by the detection unit and a predetermined luminance threshold; and
the inspection unit is configured to calculate the number of objects based on a difference between the area output information and the luminance-processed image.

3. The X-ray inspection apparatus according to claim 2, wherein
the detection unit is configured to detect the X-rays transmitted through the objects; and
when the inspection unit recognizes an overlapping area in which a plurality of objects belong to the same pixel in the image, the inspection unit is configured to correct the number of objects based on the number of objects belonging to the overlapping area in the area output information and the number of objects belonging to the overlapping area in the luminance-processed image.

4. The X-ray inspection apparatus according to claim 2 or 3, wherein the generation unit is configured to:
generate a first missing image including a first missing area where it is inferred that the object is absent from the area output information and the object is present in the luminance-processed image based on the difference between the area output information and the luminance-processed image, and
generate a first complementary image obtained by performing image processing including a process of expanding, reducing, or filtering the first missing area of the first missing image and the difference between the area output information and the luminance-processed image, and
the inspection unit is configured to correct the number of objects based on the first complementary image.

5. The X-ray inspection apparatus according to claim 1, wherein
the generation unit is configured to:
generate overlap output information obtained using a learning model with an image indicating luminance of the X-rays detected by the detection unit as an input to identify the number of overlapping objects in an overlapping area to which a plurality of objects belong in the same pixel in the image,
generate a second missing image including a second missing area where it is inferred that the object is present in the overlap output information and it is inferred that the object is absent from the area output information based on a difference between the overlap output information and the area output information,
generate a second complementary image obtained by performing image processing including a process of expanding, reducing, or filtering the second missing area of the second missing image, and
generate complementary output image obtained using the learning model with the second complementary image as an input to identify an area of the object in the second complementary image; and
the inspection unit is configured to correct the number of objects based on the complementary output image.
